**Europäisches Patentamt**

**European Patent Office**

**Office européen des brevets**

(19)

(11) Veröffentlichungsnummer : **0 024 539**
**B1**

(12) **EUROPÄISCHE PATENTSCHRIFT**

(45) Veröffentlichungstag der Patentschrift :
16.02.83

(21) Anmeldenummer : 80104245.8

(22) Anmeldetag : 18.07.80

(51) Int. Cl.³ : **C 04 B 31/34**, D 01 F 1/10,
E 04 C 5/07

(54) Polyolefinfasern oder -fäden, deren Herstellung, Verwendung als Verstärkungsfaser in der Herstellung von Bauelementen und Bauelement.

(30) Priorität : 20.08.79 DE 2933689

(43) Veröffentlichungstag der Anmeldung :
11.03.81 Patentblatt 81/10

(45) Bekanntmachung des Hinweises auf die Patenterteilung : 16.02.83 Patentblatt 83/07

(84) Benannte Vertragsstaaten :
AT BE CH DE FR GB IT LI LU NL SE

(56) Entgegenhaltungen :
WO A 80/00960
DE A 2 728 351
DE A 2 819 794
DE A 2 850 337
GB A 1 316 661

(73) Patentinhaber : CHEMIE LINZ AKTIENGESELLS-
CHAFT
St. Peter-Strasse 25
A-4020 Linz (AT)
BE CH FR GB IT LI LU NL SE AT
Lentia Gesellschaft mit beschränkter Haftung
Arabellastrasse 4 Postfach 81 05 08
D-8000 München 81 (DE)
DE

(72) Erfinder : Fuchs, Wolfgang
Wieshof 60
A-4201 Gramastetten (AT)
Erfinder : Wewerka, Manfred
Nietzschestrasse 38
A-4020 Linz (AT)
Erfinder : Kathan, Wolfgang, Dr.
Carl Boschweg 3
A-4020 Linz (AT)
Erfinder : Chodura, Eckhart, Dr.
Oldenerstrasse 112
A-4033 Linz (AT)

Polyolefinfasern oder -fäden, deren Herstellung, Verwendung als Verstärkungsfaser in der Herstellung von Bauelementen und Bauelement

Die vorliegende Erfindung betrifft Polyolefinfasern oder -fäden mit einem Gehalt an Zement als Füllstoff, die sich besonders als Verstärkungsfasern für Baustoffmischungen auf Basis Zement eignen, ein Verfahren zu deren Herstellung, deren Verwendung zur Herstellung von Bauelementen und die damit erzeugten Bauelemente.

Es ist bekannt, daß man Gegenständen, besonders Rohren und Platten aus Zement durch Zumischung von Verstärkungsfasern eine erhöhte Festigkeit verleihen kann. Am meisten wurden bisher für diesen Zweck Asbestfasern eingesetzt. In letzter Zeit sind jedoch Bestrebungen im Gange, diese Asbestfasern durch anderes Fasermaterial zu ersetzen, da inzwischen deren carcinogene Wirkung festgestellt wurde.

Als Ersatz für Asbestfasern wurden u. a. auch schon Polyolefinfasern oder -fasermaterialien in Betracht gezogen. In der GB-A 1.130.612 wurde vorgeschlagen, Polyolefin-Stapelfasern in Zement einzuarbeiten und gemäß DE-A1 2.728.351 wurden Fasern von thermoplastischen Kunststoffen wie z. B. Polypropylen, in Form eines Netzwerkes, wie es durch Aufspleißen oder Fibrillieren eines unidimensional gereckten Films entstehen, für die Verstärkung von Bauteilen aus Zement eingesetzt. Da Polyolefinfasern jedoch hydrophob sind, stößt die Einmischung auf Schwierigkeiten und die Haftung in der Matrix läßt zu wünschen übrig, d. h. die Fasern werden bei Beanspruchung aus dem zementhältigen Material herausgezogen, sodaß ihre Festigkeit nicht zum Tragen kommt.

Gemäß GB-A 1.316.661 wurde zur Verbesserung der Haftfestigkeit von Polyolefinfasern in Zement-mörtel oder ähnlichem Material auf Basis Zement vorgeschlagen, Polyolefinfasern, insbesondere Fasern aus Polypropylen oder Polyäthylen, einzusetzen, die 20-80 % Zement (bezogen auf das Polyolefin) als Füllstoff enthalten und außerdem einen Gehalt von 0,1 bis 5,0 % (bezogen auf das Polyolefin) an einem hydrophilen oberflächenaktiven Mittel, z. B. ein solches auf Basis eines tertiären Aminsulfonates, aufweisen. Die Herstellung dieser Fasern erfolgt bevorzugt nach dem Schmelzspinnverfahren mit nachfolgender mäßiger Verstreckung, nämlich im Verhältnis 1 : 3 bis 1 : 5, es ist aber auch die Herstellung über ein Splitfaserverfahren möglich. Als Zement wird ein « normaler Zement » verwendet.

Durch den Zementzusatz wird das spezifische Gewicht der Fasern erhöht und die Fasern gemäß GB-A 1.316.661 besitzen an der Oberfläche einen hydrophilen Charakter, sodaß das Einmischen der Faser in den Zement wesentlich günstiger verläuft.

Trotzdem ließen die Festigkeitswerte der mit diesen Fasern verstärkten Zementmischungen keinen ausreichenden Zuwachs im Vergleich zu unverstärkten Proben erkennen. Der Grund liegt einerseits darin, daß die relativ gering verstreckten Fasern keine sehr hohe Reißfestigkeit besitzen, eine höhere Verstreckung aber keine Verbesserung bringt, da solche Fasern mit normalem Zement, z. B. solchem der Type PZ 275, als Füllstoff, mit zunehmender Verstreckung an Festigkeit einbüßen. Außerdem besitzen diese Fasern Bruchdehnungen, die 100 % und mehr betragen können. Fasern mit derart hoher Dehnung sind als Verstärkungsfasern ungeeignet, denn bei Beanspruchung von Betonformteilen dehnt sich die Faser in einem Ausmaß, daß die Matrix bricht, bevor die Reißfestigkeit der Verstärkungsfaser überhaupt zum Tragen kommen kann. Außerdem wurden gemäß GB-A 1.316.661 relativ starke Fasern (110-280 dtex) eingesetzt, die, wenn nach dem Schmelzspinnverfahren hergestellt, eine glatte Oberfläche besitzen.

Überraschenderweise konnte nun gefunden werden, daß eine sehr gute Verstärkung von Zement mit Hilfe von Fasern aus Polyolefinen mit Zement als Füllstoff dann möglich ist, wenn diese Fasern eine Bruchdehnung von maximal 20 % besitzen und mit einem Zement als Füllstoff hergestellt sind, der eine Korngröße von unter 90 μm besitzt. Solche Fasern lassen sich dann auch bei Zementgehalten von 40 % und mehr höher, nämlich bis auf 1 : 10 bis 1 : 12, verstrecken, als in der GB-A 1.316.661 geoffenbart, ohne daß Faserbrüche auftreten oder Festigkeitseinbußen mit zunehmendem Verstreckungsgrad zu verzeichnen wären. Fasern der geringen Bruchdehnung von maximal 20 % werden über das Splitfaserverfahren erhalten.

Gegenstand der vorliegenden Erfindung sind demnach Polyolefinfasern oder -fäden zur Verwendung als Verstärkungsfaser für Baustoffmischungen auf Basis Zement enthaltend als Füllstoff gegebenenfalls neben anderen Füllstoffen anorganischer Natur 5-80 Gew.% Zement bezogen auf das Polyolefin, die dadurch gekennzeichnet sind, daß der als Füllstoff vorliegende Zement eine Korngröße von unter 90 μm besitzt und die Fasern oder Fäden eine Bruchdehnung von maximal 20 % aufweisen.

Diese Faser, die kein oberflächenaktives Mittel enthält, läßt sich sehr gut in das zementhältige Material einmischen und besitzt eine gute Bindung zur Baustoffmischung. Die geringe Dehnung ermöglicht es, daß die Reißfestigkeit der Faser bei Beanspruchung des daraus hergestellten Beton- oder Zementmörtelformteiles voll zum Tragen kommt. Sie besitzt eine hohe Spleißneigung, was eine unregelmäßige Oberfläche mit sich bringt, die ebenfalls vorteilhaft für eine gute Verankerung im Beton ist.

Die erfindungsgemäß geforderte maximale Korngröße des als Füllstoff verwendeten Zements ist sehr wesentlich für die Eigenschaften der damit hergestellten Fasern bzw. deren Festigkeitswerte, besonders bei hohem Verstreckungsgrad. Besonders günstig ist es, wenn der Kornanteil zwischen 60 μm und 90 μm unter 1 % beträgt. Zementsorten, die dieser erfindungsgemäßen Forderung genügen, findet man z. B. unter den Zementen der Sorte PZ 475, wobei einfach durch eine Siebanalyse die Eignung feststellbar ist. Zemente der Sorte PZ 275 sind hingegen meist nicht geeignet.

Es ist ferner zweckmäßig darauf zu achten, daß die verwendeten Fasern eine Reißfestigkeit von mindestens 5 cN/tex besitzen. Vorzugsweise sollte die Reißfestigkeit mindestens 10 cN/tex betragen. Die Reißfestigkeit wird hierbei nach DIN 53 834 bestimmt.

Fasern mit dieser Reißfestigkeit und der geforderten geringen Bruchdehnung werden erhalten, wenn sie über ein Splitfaserverfahren hergestellt werden, wobei es der Vorteil der erfindungsgemäße Faser ist, daß sie bei höheren Verstreckungsgraden, vorzugsweise bei solchen von 1 : 7 und mehr, z. B. bis zu 1 : 12 an Reißfestigkeit zunehmen. Das ist für eine so hochgefüllte Faser überraschend, vor allem auch im Hinblick auf die Natur des Füllstoffes.

Die erfindungsgemäßen Polyolefinfasern oder -fäden können entweder in Stapel geschnittene Einzelfasern oder an manchen Stellen lose zusammenhängende Netzwerkfasern oder auch sogenannte Endlosfäden sein. Im Hinblick darauf, daß möglichst die für Asbestzement entwickelten Verfahren anwendbar sein sollen, sind Stapelfasern bevorzugt, wobei mit solchen einer Stapellänge von 0,2-2,0 cm besonders günstige Eigenschaften erzielt werden und gleichzeitig gute Verarbeitungsmöglichkeiten bestehen.

Die Feinheit der Faser ist an sich nicht kritisch. Da es sich um eine Splitfaser handelt, variiert sie sehr stark und beträgt beispielsweise von 1-180 dtex, wobei das gleichzeitige Vorliegen von dünnen und starken Fasern oder Faserteilen günstig ist. Zweckmäßigerweise wird die Faser oberflächlich mit einer Avivage versehen. Als solche kommt z. B. eine solche auf Basis von äthoxylierten Alkoholen oder äthoxylierten anderen organischen Verbindungen in Frage.

Die erfindungsgemäße Faser kann außer dem Zementgehalt auch noch andere Füllstoffe enthalten, wobei die Mindestmenge an Zement von 5 Gew.% einzuhalten ist. Solche füllstoffe können z. B. Talkum, Calciumcarbonat, Bariumsulfat und ähnlich sein. Es ist allerdings dabei zu beachten, daß diese Füllstoffe nur in solchen Mengen angewendet werden, daß die kennzeichnenden Eigenschaften der erfindungsgemäßen Faser, wie hydrophile Oberfläche, Spleißneigung, unregelmäßige Oberfläche, nicht verloren gehen. So ist z. B. Talkum dafür bekannt, daß er wesentlich hydrophober ist und die Spleißneigung von Polyolefinfasern herabsetzt. Zweckmäßigerweise sollte daher die Talkummenge gegenüber dem Zement nicht überwiegen.

Wie schon erwähnt, gelingt die Herstellung der erfindungsgemäßen Fasern über ein Splitfaserverfahren, gemäß dem zunächst eine Primärfolie erzeugt wird, die nach Verstrecken entweder von selbst spleißt oder in der Spleißung durch mechanische Mittel wie z. B. Stachelwalzen unterstützt wird. So hergestellte Fasern besitzen außer der erfindungsgemäß geforderten niedrigen Bruchdehnung auch durch das Aufspleißen Verästelungen und eine ungleichmäßigere Oberfläche als schmelzgesponnene Fasern, was alles zur besseren Verankerung in der zementhältigen Mischung beiträgt und einen besseren Verbund herbeiführt.

Vorzugsweise wird die Folie dabei mindestens im Verhältnis 1 : 7 verstreckt.

Ein weiterer Gegenstand der vorliegenden Erfindung sind Bauelemente wie Platten, Rohre usw., auf Basis von Zement, die die erfindungsgemäße Faser als Vestärkungsfaser enthalten. Die Faser kann hierbei in Form von Stapelfasern, Multifilamenten oder als Netzwerke, wie es bei Spleißen von Folien entsteht, zugegen sein, wobei Stapelfasern bevorzugt sind. Die Menge an Faser richtet sich nach den gewünschten Eigenschaften des Bauelementes. In der Regel hat sich eine Menge von 0,2 bis 10 Vol.% Faser bezogen auf das Bauelement als zweckmäßig erwiesen.

Die erfindungsgemäßen Bauelemente können zusätzlich auch andere übliche Verstärkungsfasern wie z. B. Kohlenstoffasern, Stahlfasern und ähnliche enthalten.

Die folgenden Beispiele sollen die erfindungsgemäße Polyolefinfaser, deren Herstellungsverfahren und -Anwendung näher darstellen.

## Beispiel 1

Polypropylenpulver wird mit 42,85 Gew.%, bezogen auf eingesetztes Polypropylen eines Portlandzementes der Type 475 und der Korngrößenverteilung

> 75 μm 0
> 60 μm 0,1 %
> 40 μm 0,8 %
> 33 μm 1,6 %
< 33 μm Rest

im Intensivmischer gemischt und anschließend granuliert. Aus dem Granulat wird nach dem Chill-roll-Verfahren eine Primärfolie hergestellt, die nach Verstreckung bei 120 °C mit einem Reckverhältnis von 1 : 7,67 unter Verwendung eines Fibrillators zu Splitfasern verarbeitet wird, die auf eine Stapellänge von 0,2 cm geschnitten wurden. Die so erhaltenen Fasern besitzen eine Reißfestigkeit nach DIN 53 834 von 9,4 cN/tex und eine Bruchdehnung von 4,3 %. Wird bei der Herstellung der Folie nicht das Chill-roll-Verfahren sondern ein Verfahren mit Wasserbadkühlung angewendet, so besitzen die Fasern beim gleichen Reckverhältnis folgende Kennzahlen :

3

Reißfestigkeit 10,7 cN/tex
Bruchdehnung    5,3 %

## Beispiel 2

Aus einem Granulat gemäß Beispiel 1 werden, wie in Beispiel 1 beschrieben, Splitfasern hergestellt und zu Stapelfasern einer Länge von 0,2 cm geschnitten, wobei jedoch ein Reckverhältnis von 1 : 8,15 gewählt wurde.

Die so erhaltenen Fasern besitzen eine Reißfestigkeit von 10,8 cN/tex und eine Bruchdehnung von 4,8 %.

## Beispiel 3

Aus einem Granulat gemäß Beispiel 1 werden, wie in Beispiel 1 beschrieben, Stapelfasern einer Länge von 0,2 und 0,5 cm hergestellt, wobei ein Reckverhältnis von 1 : 9,35 angewendet wurde.

Die so erhaltenen Fasern besitzen eine Reißfestigkeit von 13,5 cN/tex und eine Bruchdehnung von 5,3 %.

Wird bei der Herstellung der Folie nicht das Chill-roll-Verfahren sondern ein Breitschlitzdüsenverfahren mit Wasserbadkühlung angewendet, besitzen die Fasern bei Einhaltung des gleichen Reckverhältnisses folgende Kennzahlen :

Reißfestigkeit 10,3 cN/tex
Bruchdehnung    4,7 %

## Beispiel 4

Polypropylenpulver wird mit 50 Gew.%, bezogen auf eingesetztes Polypropylen, eines Portlandzementes der Type 475 mit einem Kornanteil > 60 μm von 0,2 % und über 75 μm von 0 im Intensivmischer gemischt und anschließend granuliert. Aus dem Granulat wird über eine Breitschlitzdüse mit anschließender Wasserbadkühlung eine Primärfolie hergestellt, die anschließend bei 130 °C im Verhältnis 1 : 8,77 verstreckt wird. Sie wird unter Anwendung eines mechanischen Fibrillators zu Splitfasern verarbeitet, die auf Schnittlängen von 0,6 cm und 1,3 cm geschnitten werden. Die Fasern besitzen eine Reißfestigkeit nach DIN 53 834 von 10,8 cN/tex und eine Bruchdehnung von 1,97 %.

## Beispiel 5

Aus Polypropylenpulver und dem gleichem Zement wie in Beispiel 4, jedoch unter Verwendung von 66,6 Gew.% Zement, bezogen auf das eingesetzte Polypropylen, wurde wie in Beispiel 4 beschrieben eine Mischung erzeugt, die mit Hilfe einer Chill-roll-Anlage zu einer Primärfolie verarbeitet, bei 130 °C einmal im Verhältnis 1 : 10,77 und ein anderesmal im Verhältnis 1 : 12,5 verstreckt und anschließend mechanisch fibrilliert wird. Die Faser wird dann zu einer Länge von 0,6 cm geschnitten. Sie besitzt folgende Eigenschaften :

Reckverhältnis 1 : 10,77,   Reißfestigkeit 9,1 cN/tex,
Bruchdehnung 5,07 %
Reckverhältnis 1 : 12,5,   Reißfestigkeit 11,2 cN/tex
Bruchdehnung 3,12 %.

## Beispiel 6

Gemäß den Beispielen 1 bis 3 hergestellte Fasern wurden in einer Menge von 3 Vol.% in einen für die Herstellung von Asbestzementplatten üblichen Portlandzement eingemischt und aus der Mischung wurden in üblicher Weise Platten geformt. Die Platten wurden zu schmalen Stäben gesägt und diese Stäbe bis zum Reißen einer Zugspannung in Anlehnung an die Methode nach DIN 53 455 unterworfen. Die in der nachfolgenden Tabelle mit 6 max. bezeichneten Maximalwerte sind bei vollständigem Bruch des Probestabes gemessen worden

| Probe gemäß | Verstreckungsgrad | $\sigma$ max. in N/cm$^2$ |
|---|---|---|
| Beispiel 1 | 1 : 7,67 | 192 |
| Beispiel 2 | 1 : 8,15 | 243 |
| Beispiel 3 (Schnittlänge 0,2 cm) | 1 : 9,35 | 238 |
| Beispiel 3 (Schnittlänge 0,5 cm) | 1 : 9,35 | 284 |

4

## Beispiel 7

Gemäß den Beispielen 4 und 5 hergestellte Fasern wurden mit verschiedenen handelsüblichen Avivagen auf Basis äthoxylierter Fettalkohole und eine Probe nur mit Wasser behandelt und in einer Menge von 3 Vol.% in einen für die Herstellung von Asbestzementplatten üblichen Portlandzement eingearbeitet. Aus der Mischung wurden in üblicher Weise Platten geformt und aus diesen schmale, stabförmige Probekörper gesägt, die auf ihre Zugspannung in Anlehnung an die Methode nach DIN 53 455 untersucht wurden. Die Werte, die in der Tabelle mit max. angegeben sind, wurden bei vollständigem Bruch des Stabes gemessen. Als Vergleich wurden in gleicher Weise hergestellte Probestäbe getestet, die die gleiche Menge einer Polypropylenfaser einer Stapellänge von 0,6 cm aus dem gleichen Polypropylen wie die erfindungsgemäße Faser, aber ohne Zementzusatz, jedoch ebenfalls mit der gleichen Menge Avivage versehen, enthielten. Die Polypropylenfaser wurde bei der Herstellung im Verhältnis 1 : 3,3 verstreckt und besaß eine Reißfestigkeit von 28-32 cN/tex und eine Bruchdehnung von 80-100 %. Bei den drei Proben mit 66,6 Gew.% Zement, bezogen auf Polypropylen, enthaltenden Fasern und einer Verstreckung von 1 : 12,5 handelt es sich um drei Proben mit drei verschiedenen Avivagen. Die Avivage jener Faser, mit der ein max.-Wert von 389 N/cm² erzielt wurde sowie jene der Vergleichsfaser war die gleiche, wie sie für die Proben mit 50 Gew.% Zement, bezogen auf Polypropylen, in der Faser eingesetzt wurde.

### Tabelle

| Probe gemäß | Schnitt länge cm | Verstreckungsgrad | $\sigma$ max N/cm² |
|---|---|---|---|
| Beispiel 4 mit Wasser beh. | 0,6 | 1 : 8,77 | 442 |
| Beispiel 4 aviviert | 0,6 | 1 : 8,77 | 482 |
| Beispiel 4 aviviert | 1,3 | 1 : 8,77 | 494 |
| Beispiel 5 aviviert | 0,6 | 1 : 10,77 | 304 |
| Beispiel 5 aviviert | 0,6 | 1 : 12,5 | 327 |
| Beispiel 5 aviviert | 0,6 | 1 : 12,5 | 362 |
| Beispiel 5 aviviert | 0,6 | 1 : 12,5 | 389 |
| Beton mit PP-Faser aviviert | 0,6 | 1 : 3,3 | 154 |

## Ansprüche

1. Polyolefinfasern oder -fäden zur Verwendung als Verstärkungsfaser für Baustoffmischungen auf Basis Zement enthaltend als Füllstoff gegebenenfalls neben anderen Füllstoffen anorganischer Natur 5-80 Gew.% Zement bezogen auf das Polyolefin, dadurch gekennzeichnet, daß der als Füllstoff vorliegende Zement eine Korngröße von unter 90 µm besitzt und die Fasern oder Fäden eine Bruchdehnung von maximal 20 % aufweisen.

2. Polyolefinfasern oder -fäden nach Anspruch 1, dadurch gekennzeichnet, daß in dem als Füllstoff vorliegenden Zement der Kornanteil zwischen 60 µm und 90 µm unter 1 % beträgt.

3. Polyolefinfasern oder -fäden nach den Ansprüchen 1 und 2, dadurch gekennzeichnet, daß der Verstreckungsgrad mindestens 1 : 7 beträgt.

4. Polyolefinfasern oder -fäden nach den Ansprüchen 1 bis 3, dadurch gekennzeichnet, daß sie eine Reißfestigkeit von mindestens 5 cN/tex besitzen.

5. Polyolefinfasern oder -fäden nach den Ansprüchen 1 bis 4, dadurch gekennzeichnet, daß sie Stapelfasern mit einer Stapellänge von 0,2-2,0 cm sind.

6. Polyolefinfasern oder -fäden nach den Ansprüchen 1 bis 5, dadurch gekennzeichnet, daß sie mit einer Avivage versehen sind.

7. Verfahren zur Herstellung von Polyolefinfasern oder -fäden nach den Ansprüchen 1 bis 6, dadurch gekennzeichnet, daß Polyolefine mit einem Gehalt von 5-80 % gezogen auf das Polyolefin, an einem Zement mit einer Korngröße unter 90 μm, vorzugsweise einer Korngrößenverteilung, gemäß der der Kornanteil zwischen 60 μm und 90 μm unter 1 % beträgt, einem Splitfaserverfahren mit oder ohne mechanische Fibrillierung unterworfen werden.

8. Verfahren nach Anspruch 7, dadurch gekennzeichnet, daß der im Zuge des Splitfaserverfahrens hergestellte Film vor der Fibrillierung mindestens im Verhältnis 1 : 7 verstreckt wurde.

9. Verwendung von Polyolefinfasern oder -fäden gemäß den Ansprüch 1 bis 6 als Verstärkungsfasern in der Herstellung von Bauelementen auf Basis Zement.

10. Bauelement auf Basis von Zement mit einem Gehalt an Fasern oder Fäden aus Polyolefinen, die Zement als Füllstoff enthalten, als Verstärkungsfasern, dadurch gekennzeichnet, daß die Polyolefinfasern oder -fäden solche gemäß den Ansprüchen 1 bis 6 sind und in Form von Stapelfasern, Multifilament oder Netzwerk vorliegen.

## Claims

1. Polyolefine fibres or filaments for use as reinforcing fibres for building material mixtures based on cement and containing, as filler, optionally together with other fillers of inorganic nature, 5-80 % by weight, relative to the polyolefine, of cement, characterised in that the cement present as filler has a particle size of less than 90 μm and that the fibres or filaments have an elongation at break of at most 20 %.

2. Polyolefine fibres or filaments according to Claim 1, characterised in that in the cement present as filler the proportion of particles 60 μm and 90 μm is less than 1 %.

3. Polyolefine fibres or filaments according to Claims 1 and 2, characterised in that the draw ratio is at least 1 : 7.

4. Polyolefine fibres or filaments according to Claims 1 to 3, characterised in that they have a tenacity of at least 5 cN/tex.

5. Polyolefine fibres or filaments according to Claims 1 to 4, characterised in that they are staple fibres having a staple length of 0.2-2.0 cm.

6. Polyolefine fibres or filaments according to Claims 1 to 5, characterised in that they are provided with an avivage.

7. Process for the production of polyolefine fibres or filaments according to Claims 1 to 6, characterised in that polyolefines containing 5-80 %, relative to the polyolefine, of a cement having a particle size of less than 90 μm, and preferably having a particle size distribution such that the proportion of particles between 60 μm and 90 μm is less than 1 %, are subjected to a split fibre process with or without mechanical fibrillation.

8. Process according to Claim 7, characterised in that the film produced in the course of the split fibre process has been drawn in a ratio of at least 1 : 7 before fibrillation.

9. Use of polyolefine fibres or filaments according to Claims 1 to 6 as reinforcing fibres in the production of building elements based on cement.

10. Building element based on cement and containing, as reinforcing fibres, fibres or filaments of polyolefines which contain cement as filler, characterised in that the polyolefine fibres or filaments are those according to Claims 1 to 6 and are in the form of staple fibres, multifilament or network.

## Revendications

1. Fibres ou fils de polyoléfine destinés à être utilisés comme fibre de renforcement pour des mélanges de matériau de construction à base de ciment, renfermant comme charge, éventuellement conjointement à d'autres charges de nature inorganique, de 5 à 80 % en poids de ciment calculé sur la base de la polyoléfine, caractérisés en ce que le ciment présent comme charge a une granulométrie inférieure à 90 microns et en ce que les fibres ou fils possèdent un allongement à la rupture de 20 % au maximum.

2. Fibres ou fils de polyoléfine suivant la revendication 1, caractérisés en ce que, dans le ciment présent comme charge, la fraction granulométrique comprise entre 60 et 90 microns est inférieure à 1 %.

3. Fibres ou fils de polyoléfine suivant les revendications 1 et 2, caractérisés en ce que le degré d'étirage est d'au moins 1 : 7.

4. Fibres ou fils de polyoléfine suivant l'une quelconque des revendications 1 à 3, caractérisés en ce qu'ils possèdent une résistance à la traction d'au moins 5 cN/tex.

5. Fibres ou fils de polyoléfine suivant l'une quelconque des revendications 1 à 4, caractérisés en ce qu'ils sont constitués par des filaments ayant une longueur de 0,2 à 2,0 cm.

6. Fibres ou fils de polyoléfine suivant l'une quelconque des revendications 1 à 5, caractérisés en ce qu'ils sont munis d'un avivage.

7. Procédé pour la production de fibres ou fils de polyoléfine suivant l'une quelconque des revendications 1 à 6, caractérisé en ce que des polyoléfines ayant une teneur de 5 à 80 %, sur la base de la polyoléfine, en ciment ayant une granulométrie inférieure à 90 microns, de préférence une distribution granulométrique suivant laquelle la fraction granulométrique comprise entre 60 et 90 microns est inférieure à 1 %, sont soumises à un procédé de production de fibres par fragmentation avec ou sans fibrillation mécanique.

8. Procédé suivant la revendication 7, caractérisé en ce que le film fabriqué au cours du procédé de production de fibres par fragmentation est étiré, avant la fibrillation, selon un rapport d'au moins 1 : 7.

9. Utilisation de fibres ou fils de polyoléfine suivant l'une quelconque des revendications 1 à 6 comme fibres de renforcement pour la fabrication d'éléments de construction à base de ciment.

10. Elément de construction à base de ciment renfermant des fibres ou fils de polyoléfine contenant du ciment comme charge et servant de fibres de renforcement, caractérisé en ce que les fibres ou fils de polyoléfine sont constitués par des fibres ou fils suivant l'une quelconque des revendications 1 à 6 et sont présents sous forme de filaments, de multi-filaments ou de réseaux.